# EUROPEAN PATENT APPLICATION

(11) **EP 4 773 330 A1**
(43) Date of publication of application: **08.07.2026**
(21) Application number: 24953917.2
(22) Date of filing: 19.11.2024
(51) Int. Cl.: H01M 10/42, H01M 50/531, G01N 23/04, G01N 23/083, G01N 23/18

(54) **ELECTRODE TAB INSPECTION APPARATUS FOR ELECTRODE ASSEMBLY AND ELECTRODE TAB INSPECTION METHOD USING SAME**

(30) Priority: 05.09.2024 KR 20240120918
(71) Applicant: LG Energy Solution, Ltd., Seoul 07335 (KR)
(72) Inventor: KIM, Shi Hwan, Daejeon 34122 (KR); AHN, Ji Hoon, Daejeon 34122 (KR)
(74) Representative: Plasseraud IP
(86) International application number: PCT/KR2024/018291
(87) International publication number: WO 2026/054174

(57) **Abstract**

Disclosed are an electrode tab inspection apparatus capable of quickly and accurately determining whether stacked electrode tabs are defective at low cost and an electrode tab inspection method using the same, and more particularly an electrode tab inspection apparatus including a photographing unit configured to photograph the electrode tab through transmission photography, an edge setting unit configured to set an edge for the part of a photograph result of the photographing unit in which the color or brightness changes, and a classification unit configured to classify the edge set by the edge setting unit as being related to stability or not being related to stability and an electrode tab inspection method using the same. The inspection apparatus and method achieve a detection rate of 100% for defects in the electrode tab.

## Description

### [Technical Field]

The present invention relates to an electrode tab inspection apparatus for electrode assemblies and an electrode tab inspection method using the same. More particularly, the present invention relates to an electrode tab inspection apparatus for detecting defects occurring in stacked electrode tabs when a plurality of electrodes is stacked and an electrode tab inspection method using the same.

### [Background Art]

An electrode assembly may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which battery cells are stacked in the state in which a separator is interposed therebetween and are then attached to each other. In general, the stacked type electrode assembly is used in a pouch-shaped battery cell.

In the stacked type electrode assembly, among the various electrode assemblies, a positive electrode, a negative electrode, and a separator are manufactured in advance and are then stacked. The part of a current collector of thin metal foil used in the manufacture of the positive electrode and the negative electrode that forms an uncoated portion constitutes an electrode tab. When the negative electrode, the separator, and the positive electrode are stacked, the electrode tabs are also stacked in the same manner.

The stacking process is very quickly performed in consideration of manufacturing efficiency and the like, and as a result, folding, bending, and tearing of the electrode tab of the thin metal foil may occur. Wrinkling and overlapping also occur in addition to folding, bending, and tearing. Folding is when thin metal is folded, bending is when the shape of the thin metal is deformed, and tearing is when a part of the thin metal foil is torn apart. During a stacking process, a part that has been stressed may be pushed out and wrinkling may occur, and overlapping also occurs as wrinkling become stronger.

The electrode tab, which is an uncoated portion, is very thin and protrudes outward, and such an abnormal phenomenon may occur in various processes, such as lamination, folding, and packaging, in addition to the process of stacking the negative electrode, the separator, and the positive electrode. That is, in addition to folding, bending, and tearing, wrinkling and overlapping may occur in processes other than stacking.

Patent Document 1 discloses an apparatus for determining the deformation of stacked electrode tabs, wherein the thickness of an electrode tab is measured using a short circuit measuring instrument disposed on one side and the other side of the electrode tab. If the measured thickness of the electrode tab is greater than a predetermined thickness, it is determined that bending or folding has occurred. Patent Document 1 determines whether a single electrode tab is defective instead of all electrode tabs, and can only inspect macroscopic defects of the single electrode tab, such as bending or folding. The thickness is measured by short circuit, which indirectly identifies defects, but precision of this method is low.

Patent Document 2 discloses an apparatus for determining the deformation of stacked electrode tabs, wherein images of both side surfaces of the stacked electrode tabs are captured, and if the images are different from each other, it determines that folding has occurred. In Patent Document 2, determination is performed using the images of the stacked side surfaces, but it is impossible to inspect defects that occur only in the interior of the electrode tabs where observation is not possible from the side surfaces. Patent Document 2 has the limitation that two image sensors are used, whereby only two side surfaces are observed but the front surface is not observed.

Patent Document 3 discloses an apparatus for detecting missing and folding defects in secondary battery electrode tabs, which is an apparatus that detects abnormalities using an image obtained by obliquely projecting an X-ray onto stacked electrode tabs. Defects are detected by checking the distance between the electrode tabs in a single image. In Patent Document 3, images are also acquired from a first oblique angle and a second oblique angle rotated 90 degrees relative to the first oblique angle, and the images are overlapped to detect defects. In Patent Document 3, the projected images are in the form of a staircase, and the distance therebetween is not constant, but gradually decreases or increases. In order to check the distance or to inspect defects by overlapping, a separate means for determining the same must be provided or a person must directly inspect the same with the naked eye.

Patent Document 4 discloses an apparatus and method for determining whether electrode tabs are folded, wherein the apparatus detects load generated in stacked electrode tabs for each region during a process of bending and restoring the electrode tabs to determine whether the electrode tabs have been folded. There may be errors in the inspection of the load because the premise that the material used is of a certain quality must be established.

As such, various methods have been attempted in order to detect defects in the stacked electrode tabs. Defects caused by folding or tearing of the tabs must be sorted and detected because the defects may cause low voltage/ignition of a battery cell. As the use of large-capacity battery packs, such as in electric vehicles and energy storage systems, is increasing, there is also a great deal of interest in methods of quickly and completely detecting stacking defects.

Among conventional various detection methods, a visual detection method using an X-ray has the highest precision of the measurement results. Although the measurement results are precise, there are many shortcomings in the technology that determines whether there are defects exist based on the measured visual data.

The results measured by an X-ray are black-and-white photographs, in which the parts of the electrode tabs that are stacked without any abnormalities have the same shade, but the parts of the electrode tabs where folding, bending, tearing, wrinkling, and overlapping have occurred show a different shade than the surroundings.

The most basic method of determining defects based on shading is to use human vision. In this case, the accuracy of determination is relatively high, but since the method is performed manually, the speed is slow and it is impossible to apply the method to the actual process. Workers are exposed to continuous repetitive tasks, and it is difficult to achieve a constant inspection rate due to the stress caused thereby.

An absolute standard for shading may be set, or a relative standard with respect to the surroundings may be set, and it may be determined whether there are defects based thereon. However, in this case, there is a problem of determining there are defects even when there are no defects, as can be seen from the following example/comparative example.

Determination of shading is similar to pattern recognition, and artificial intelligence such as deep learning, which has strengths in this regard, may be utilized. In the case of artificial intelligence, a separate training process therefor is required, and products produced during the training process are difficult to trust. Usually, about 10,000 samples are required for pattern training, and therefore the initial quantity of 10,000 may not be usable. Moreover, for training, a user must manually determine whether an individual product is normal or defective and provide the result of determination to a deep learning model. In addition, continuous training is required to reduce detection errors. Furthermore, if the specifications of the product are changed, training must be performed again. Stacking of electrode tabs is the most basic one of overall battery cell manufacturing processes, in which large numbers of negative and positive electrodes are stacked at a very high speed. In order to smoothly apply deep learning in line with the fast manufacturing speed, very strong computing power is also required.

An electrode tab inspection apparatus for detecting whether defects has occurred in stacked electrode tabs in line with enhanced safety standards at low cost and an electrode tab inspection method using the same have not yet been proposed.

### (Patent Documents)

Korean Patent Application Publication No. 2020-0109040 ("Patent Document 1")
US Patent Application Publication No. 2023-0064943 ("Patent Document 2")
Korean Registered Patent Publication No. 10-2236815 ("Patent Document 3")
Korean Patent Application Publication No. 2023-0011760 ("Patent Document 4")

### [Disclosure]

### [Technical Problem]

The present invention has been made in view of the above problems, and it is an object of the present invention to provide an electrode tab inspection apparatus capable of quickly and accurately determining whether stacked electrode tabs are defective at low cost and an electrode tab inspection method using the same.

### [Technical Solution]

In order to accomplish the above object, the present invention provides an electrode tab inspection apparatus for electrode assemblies, the electrode tab inspection apparatus including a photographing unit configured to photograph the electrode tab through transmission photography, an edge setting unit configured to set an edge for a part of a photograph result of the photographing unit in which color or brightness changes, and a classification unit configured to classify the edge set by the edge setting unit as being related to stability or not being related to stability. The electrode tab may be constituted by two or more single electrode tabs that are stacked. The photographing unit may take a photograph through transmission photography using an X-ray.

The photographing unit according to the present invention corresponds to a conventional X-ray inspection device. When an electrode assembly including stacked electrode tabs continuously moves through a conveyor belt, an X-ray device disposed above or under the electrode assembly emits an X-ray, and a device configured to detect the X-ray that has penetrated electrode tabs is disposed on the side of the electrode assembly opposite the X-ray device. In order to detect defects of the electrode tabs while minimizing the impact on the electrode assembly, it is preferable to use a low power device that emits an X-ray of 50 kV or less.

A photograph result obtained through the device that detects the X-ray is a digitized photograph result, which is transmitted to a computer or the like disposed on the side of the X-ray inspection device or to a server in a separate location for analysis.

The photograph result obtained by the X-ray detection device is a grayscale photograph, not a black-and-white photograph. A grayscale picture or photograph may show different levels of light and dark depending on the settings. In the case of 8-bit, the degree of black and white may be represented in 256 steps, and in the case of 16-bit, the degree of black and white may be represented in 65,536 steps.

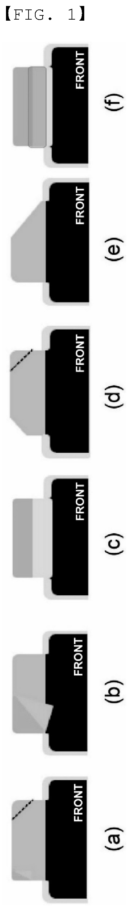

FIG. 1 is a schematic view showing the form of defects that occur in stacked electrode tabs. FIG. 1 is an enlarged view showing the part of an electrode assembly where the electrode tabs are located. An upwardly protruding part indicates the stacked electrode tabs, and a lower part is a part with an active material. FIG. 1 shows a defective part as being stacked on the uppermost layer in order to explain the form of the defects. In FIG. 1, the middle of the electrode tabs represents the uppermost electrode tab, and the outermost part of the electrode tabs represents the electrode tab stacked thereunder. (a), (b), and (c) show a rear surface (an overturned surface) of the uppermost electrode tab. A dotted line indicates a fold mark.

In FIG. 1, (a) to (c) show folding of the electrode tab, and (d) to (f) show cutting of the electrode tab. (a) shows that a part of the left corner is folded, but the folded part is in the electrode tab, and the right corner has a fold mark. (b) shows that the folded part overlaps an electrode active material area. (c) shows that the upper part of the electrode tab is completely folded horizontally.

(d) shows that a part of the left corner is cut off and the right corner has a fold mark. (e) shows that the right corner is greatly cut off. (f) shows that an upper part of the outermost electrode tab is completely folded. Due to the nature of X-rays, defects may be detected even if the defects occur inside.

All of (a) to (f) of FIG. 1 show defects that affect the safety of the battery cell and must be sorted. However, the folded right corner of (a) and (d) may not be considered defective in some cases.

In the present invention, in the X-ray photograph result of the electrode tab, the folded part or the fold mark in (a) to (f) of FIG. 1 are all set as an edge. The edge may be set for a part of the digitized photograph result where the color or brightness of a pixel changes, and the part where the color or brightness of the pixel changes may be a part where the rate of change in the color or brightness of the pixel is equal to or greater than a reference value when the rate of change is measured. Setting the borderline from the digitized photograph result or by digitizing the photograph result is a widely used technique in recent photograph editing programs.

The edge is set to display abnormal parts of the electrode tab, such as folding, bending, tearing, wrinkling, and overlapping. The edge is set using a differential value, which is the rate of change in the color or brightness of the pixel, for the digitized photograph result. The digitized photograph result is a collection of many numbers that are not expressed as formulas, and therefore a method of approximating the first derivative may be used in order to analytically simulate the rate of change or the differential value. In addition, since the digitized photograph result is a two-dimensional result, a gradient that includes the rate of change in the x-axis and y-axis directions may be used.

Specific examples of a method of setting the edge in the digitized photograph result include the Sobel filter, the Marr-Hildreth edge filter, and the Canny edge filter, but any other methods capable of setting the edge may be used without limitations. The method of setting the edge for the digitized photograph result was introduced in the 1980s and is widely known, and therefore a detailed description thereof will be omitted.

The photograph result obtained by photographing the electrode tab through transmission photography according to the present invention is not complicated in terms of color, brightness, and shape, and similar results are derived even when a conventional edge setting method is used. However, in setting criteria for whether or not there is an edge in selecting a specific filter, a method capable of displaying wrinkling and overlapping in addition to folding, bending, and tearing that may occur in the electrode tab must be selected. Those skilled in the art may easily determine whether wrinkling and overlapping are displayed in addition to folding, bending, and tearing using a method of selecting the edge for a few digitized photograph results of the electrode tab that have been photographed. This makes it easy to select an edge setting method or filter that is suitable for the process and to use the selected method for subsequent detection.

The classification unit may include a boundary surface setting portion configured to set a predetermined closed polygon or closed curve for the photograph result, an edge classification portion configured to divide the edge into unconnected edges, and a first classification portion configured to classify each of the divided edges as being related to stability if each of the divided edges completely divides the predetermined closed polygon or closed curve into two areas and as not being related to stability if not.

The classification unit may be replaced by a second classification portion configured to classify each of the divided edges as being related to stability if each of the divided edges abuts a corner of the predetermined closed polygon or closed curve twice or more and as not being related to stability if not.

The predetermined closed polygon or closed curve may be formed at an outer periphery of the electrode tab when viewed from above or at a position spaced inward from the outer periphery. A specific example of the spaced position may be 1 mm to 5 mm, preferably 2 mm to 3 mm, inwardly from the outer periphery.

A determination unit configured to determine the electrode assembly as defective when the classification unit classifies the edge as being related to stability may be added.

When the stacked electrode assembly is photographed using an X-ray, the electrode tab of the uncoated portion and the electrode active material layer show a large difference in shading. This allows the outer periphery of the electrode tab, which is the uncoated portion, alone to be set as the predetermined closed polygon or closed curve. When the electrode tab is folded or bent, if the folded part or the bent part does not extend beyond the boundary surface of the electrode tab, i.e., if the folded part or the bent part does not come into contact with the electrode active material layer, the folded part or the bent part may be excluded from the defects because the folded part or the bent part does not substantially affect safety. Furthermore, the outer edges of the stacked electrode tabs may be cut separately. In consideration of this case, the predetermined closed polygon or closed curve may be set so as to be spaced apart inwardly from the outer periphery of the electrode tab, which is an uncoated portion, by a predetermined distance.

In addition, the present invention provides an electrode tab inspection method for electrode assemblies, the electrode tab inspection method including a first step of photographing the electrode tab through transmission photography, a second step of setting an edge for a part of a photograph result of the photographing unit in the first step in which color or brightness changes, and a third step of classifying the edge in the second step as being related to stability or not being related to stability.

The transmission photography is performed using light that can penetrate the electrode tab, and the type of light is not limited as long as the light can penetrate the electrode tab such that the electrode tab is photographed, but preferably an X-ray is used. Meanwhile, the transmission photography may be performed above or under the stacked electrode tabs.

The electrode tab may be constituted by two or more single electrode tabs that are stacked.

The first step may be taking a photograph through transmission photography using an X-ray.

Setting the edge in the second step may be setting the edge for a part of the digitized photograph result where the color or brightness of a pixel changes, and the part where the color or brightness of the pixel changes may be a part where the rate of change in the color or brightness of the pixel is equal to or greater than a reference value when the rate of change is measured. Setting the borderline from the digitized photograph result or by digitizing the photograph result is a widely used technique in recent photograph editing programs.

Setting the edge in the second step may be setting the edge such that folding, bending, tearing, wrinkling, and overlapping of the electrode tab are displayed.

Specifically, the edge is set using a differential value, which is the rate of change in the color or brightness of the pixel, for the digitized photograph result. The digitized photograph result is a collection of many numbers that are not expressed as formulas, and therefore a method of approximating the first derivative may be used in order to analytically simulate the rate of change or the differential value. In addition, since the digitized photograph result is a two-dimensional result, a gradient that includes the rate of change in the x-axis and y-axis directions may be used.

Specific examples of a method of setting the edge in the digitized photograph result include the Sobel filter, Marr-Hildreth edge filter, and Canny edge filter, but any other methods capable of setting the edge may be used without limitations. The method of setting the edge for the digitized photograph result was introduced in the 1980s and is widely known, and therefore a detailed description thereof will be omitted.

The photograph result obtained by photographing the electrode tab through transmission photography according to the present invention is not complicated in terms of color, brightness, and shape, and similar results are derived even when a conventional edge setting method is used. However, in setting criteria for whether or not there is an edge in selecting a specific filter, a method capable of displaying wrinkling and overlapping in addition to folding, bending, and tearing that may occur in the electrode tab must be selected. Those skilled in the art may easily determine whether wrinkling and overlapping are displayed in addition to folding, bending, and tearing using a method of selecting the edge for a few digitized photograph results of the electrode tab that have been photographed. This makes it easy to select an edge setting method or filter that is suitable for the process and to use the selected method for subsequent detection.

The third step may include a 3-1 step of setting a predetermined closed polygon or closed curve for the photograph result in the first step, a 3-2 step of dividing the edge in the second step into unconnected edges, and a 3-3 step of classifying each of the edges divided in the 3-2 step as being related to stability if each of the edges completely divides the predetermined closed polygon or closed curve into two areas and as not being related to stability if not.

The 3-3 step may be replaced by classifying each of the edges divided in the 3-2 step as being related to stability if each of the divided edges abuts a corner of the predetermined closed polygon or closed curve twice or more and as not being related to stability if not.

The 3-1 step and the 3-2 step may be performed in a different order or simultaneously.

The predetermined closed polygon or closed curve may be formed at an outer periphery of the electrode tab when viewed from above or at a position spaced inward from the outer periphery. A specific example of the spaced position may be 1 mm to 5 mm, preferably 2 mm to 3 mm, inwardly from the outer periphery.

A fourth step of determining the electrode assembly to be defective if there is an edge related to safety in the third step may be added.

When the stacked electrode assembly is photographed using an X-ray, the electrode tab of the uncoated portion and the electrode active material layer show a large difference in shading. This allows the outer periphery of the electrode tab, which is the uncoated portion, alone to be set as the predetermined closed polygon or closed curve. When the electrode tab is folded or bent, if the folded part or the bent part does not extend beyond the boundary surface of the electrode tab, i.e., if the folded part or the bent part does not come into contact with the electrode active material layer, the folded part or the bent part may be excluded from the defects because the folded part or the bent part does not substantially affect safety. Furthermore, the outer edges of the stacked electrode tabs may be cut separately. In consideration of this case, the predetermined closed polygon or closed curve may be set so as to be spaced apart inwardly from the outer periphery of the electrode tab, which is an uncoated portion, by a predetermined distance.

In addition, the present invention may provide any possible combinations of the above solving means.

### [Advantageous Effects]

The present invention is capable of providing an electrode tab inspection apparatus for electrode assemblies, the electrode tab inspection apparatus including a photographing unit configured to photograph the electrode tab through transmission photography, an edge setting unit configured to set an edge for a part of a photograph result of the photographing unit in which the color or brightness changes, and a classification unit configured to classify the edge set by the edge setting unit as being related to stability or not being related to stability.

In addition, the present invention is capable of providing an electrode tab inspection method for electrode assemblies, the electrode tab inspection method including a first step of photographing the electrode tab through transmission photography, a second step of setting an edge for a part of a photograph result of the photographing unit in the first step in which the color or brightness changes, and a third step of classifying the edge in the second step as being related to stability or not being related to stability.

The electrode tab inspection apparatus according to the present invention and the electrode tab inspection method using the same have the advantages of quickly and accurately determining whether stacked electrode tabs are defective at low cost. When the electrode tab inspection apparatus according to the present invention and the electrode tab inspection method using the same are applied, a detection rate of 100% is achieved.

Also, in the electrode tab inspection apparatus according to the present invention and the electrode tab inspection method using the same, an inspection and detection method is simple, and it is possible to completely inspect all produced electrode assemblies in real time. The electrode tab inspection apparatus according to the present invention and the electrode tab inspection method using the same can inspect 15 electrode assemblies per minute.

### [Description of Drawings]

FIG. 1 is a schematic view showing the form of defects that occur in electrode tabs when stacked.
FIG. 2 is a view showing an example in which an apparatus and method according to the present invention are sequentially applied to a photograph result of electrode tabs.
FIG. 3 is a schematic view illustrating the analysis mechanism of the apparatus and method according to the present invention.
FIGs. 4 and 5 are views showing examples in which the apparatus and method according to the present invention are applied to various defects of electrode tabs.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described with reference to a photograph result of electrode tabs.

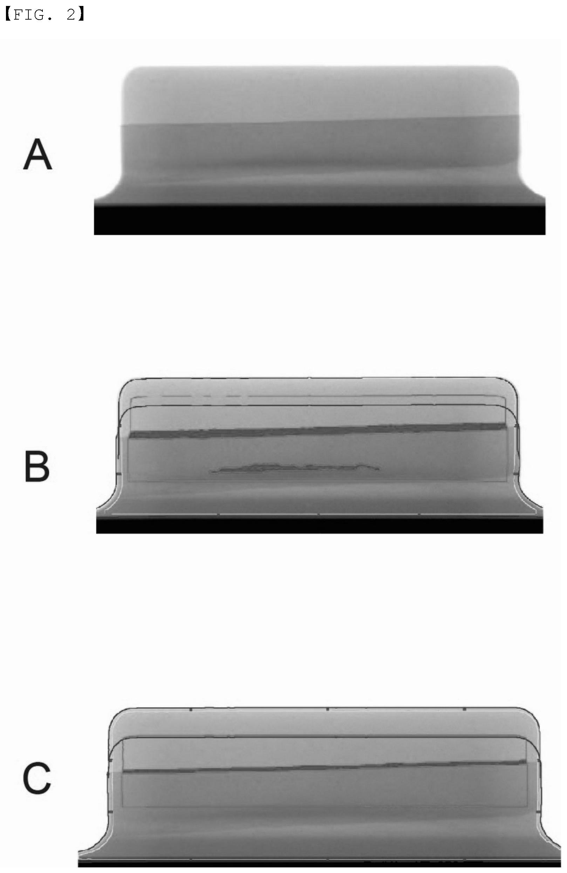

FIG. 2 is a view showing an example in which an apparatus and method according to the present invention are sequentially applied to a photograph result of electrode tabs. FIG. 2 shows a photograph result of stacked electrode tabs obtained using an X ray and photographs of the stacked electrode tabs sequentially processed by the apparatus and method according to the present invention. In FIG. 2, A is the original photograph, B is the photograph with an edge set, and C is the photograph after classification. The electrode tabs of FIG. 2 have a part where the electrode tabs are folded horizontally, as shown in (c) of FIG. 1, and wrinkling occurred at lower ends of the electrode tabs in the photograph, i.e., the parts of the electrode tabs close to an active material coating portion.

When an edge according to the present invention is set, a separate edge is displayed on the original photograph, as shown in B.

It can be seen from B and C that various closed polygons or closed curves are set according to the present invention. If folding or cutting of electrodes occurs in the vicinity of the outermost edges of the electrode tabs, the safety of the electrodes may not be significantly affected. In addition, if wrinkling of the electrode tabs occur in the immediate vicinity of upper left corners or upper right corners of the electrode tabs, the wrinkling may also be detected as defects when a closed polygon or closed curve is set as the shape of each of the electrode tabs. In addition, a process of cutting a part of an outer surface of each of the stacked electrode tabs through a back end process may be added, and in order to increase the detection rate of defects, it is preferable to set the closed polygon or closed curve in a state of being inwardly spaced apart from outer surfaces of the actual electrode tabs by a predetermined distance rather than aligning the same with the outer surfaces of the actual electrode tabs. In FIG. 2, the shape that is inwardly spaced apart from the outer surfaces of the actual electrode tabs is shown as a light-colored rectangle. The desired spacing distance may be adjusted, but it is preferable for the distance from the outer surfaces of the electrode tabs to be 2 to 3 mm.

In C of FIG. 2, the edge set in B is divided into unconnected edges, and if each divided edge completely divides the closed polygon or closed curve into two regions, the same is classified as being related to stability and is retained; otherwise, the same is classified as not being related to stability and is deleted.

In C of FIG. 2, if each divided edge abuts a corner of the closed polygon or closed curve twice or more, the same is classified as being related to stability and is retained; otherwise, the same is classified as not being related to stability and is deleted.

It is also possible to mathematically easily determine whether the edge, i.e., a kind of straight line or curve, completely divides another closed polygon or closed curve into two regions or abuts the corner of another closed polygon or closed curve twice or more. Such determination may be easily performed by simulating the edge, the closed polygon, or the closed curve in coordinates using formulas or the like and then mathematically calculating whether the same are duplicated. The analysis tool for such images is simpler than the method of setting the edge, and has been widely used as a vision tool for cameras since the 1980s. When the method according to the present invention is applied, there is the advantage of not requiring a lot of computing resources such as deep learning, being very fast in analysis, and not requiring separate training, whereby immediate application to all products is possible.

Referring to C of FIG. 2, it can be seen that wrinkling that are not related to defects have been deleted, while folding remained. If there is any edge remaining in C of FIG. 2, the electrode tabs are defective, and if there is no edge remaining, the electrode tabs are not defective.

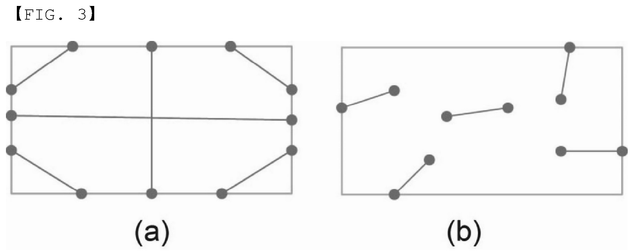

FIG. 3 is a schematic view illustrating the analysis mechanism of the apparatus and method according to the present invention. FIG. 3 is a simple schematic view of the edges and the closed polygon or closed curve of FIG. 2. The rectangle of (a) and (b) represents a closed polygon or closed curve, and the line segments with round dots at both ends represent the edges.

In FIG. 3, (a) shows all defective edges, and (b) shows all non-defective edges. It is very simple and efficient to use an X-ray to photograph the results. However, technology to determine defects based on the results has not yet been provided. It takes a great deal of training and experience for a doctor to determine whether a patient has a disease based on the photograph results using an X-ray. The same is true for the determination of defects in electrode tabs using X-ray photograph results, which may be identified by an experienced user or by using an artificial intelligence method such as deep learning. In the case of artificial intelligence, separate training is required, and for training, the user must manually determine whether each individual product is normal or defective, and a high-specification computer is required. Continuous training is required to increase the accuracy of defect detection, and even after such a process, the accuracy of defect detection does not reach 100%.

The present invention is a very innovative technology that sets the edges using the existing image processing method, separates unconnected edges from each other, and determines the physical contact relationship between the edges and the closed polygon or closed curve that forms the electrode tabs, thereby achieving a detection rate of 100% while determining the defects of the electrode tabs very quickly.

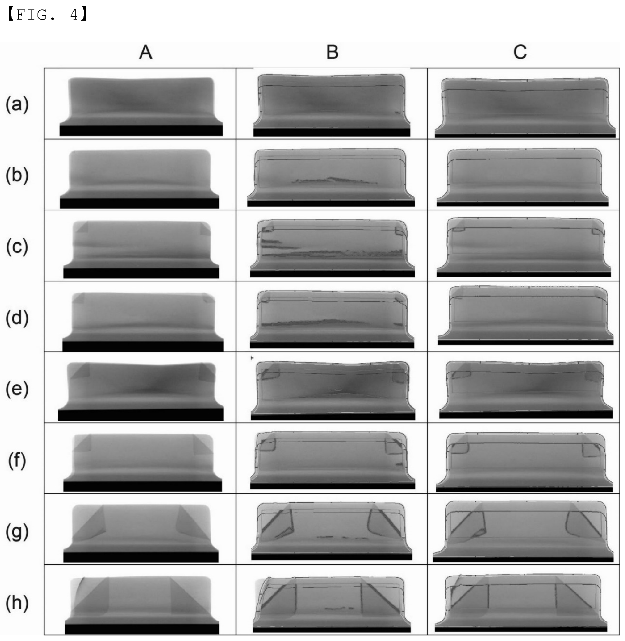

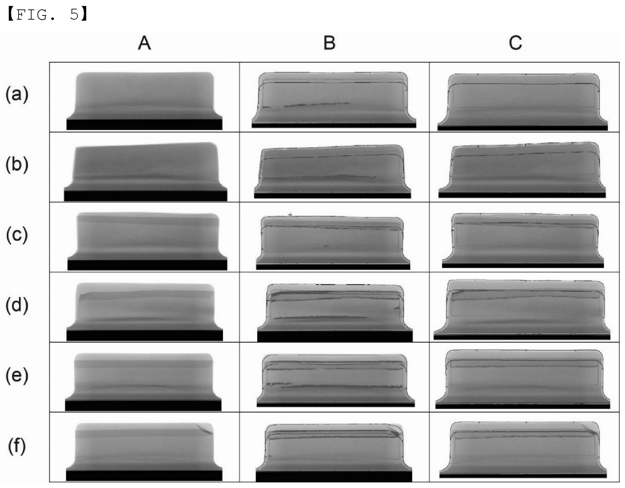

FIGs. 4 and 5 are views showing examples in which the apparatus and method according to the present invention are applied to various defects of electrode tabs. In FIGs. 4 and 5, A is the original photograph, B is the photograph with the edge set, and C is the photograph after classification, which is the same as FIG. 2, and therefore a duplicate description thereof will be omitted.

Specifically, FIG. 4 shows the case of detecting defects in the corner diagonal, which corresponds to (a) or (b) of FIG. 1. FIG. 5 shows intermediate folding, which corresponds to (c) of FIG. 1 or FIG. 2. In FIGs. 4 and 5, a to h in parentheses correspond to the respective electrode tabs.

In FIG. 4, (a) shows overlapping, which is not considered as a defect, and (b) shows electrode wrinkling, which is not considered as a defect. (c) and (d) show corner folding, wrinkling, and overlapping, but the final C clearly shows only edge folding. (e) to (h) show that corner folding and wrinkling occurred at the same time, but in the end, only the corner folding is clearly shown.

Although (a) to (f) of FIG. 5 show wrinkling, it can be seen that in B, wrinkling appeared as edges, but in C, all of the wrinkling were deleted through the apparatus and method according to the present invention. (c), (d), (e), and (f) shows the case in which folding occurred, and (f) shows that upper folding and corner folding occurred at the same time. It can be seen that the type and number of defects can be clearly identified in all cases.

When the apparatus and method according to the present invention were used to detect defects, such as folding and cutting, in the field, 100% of the 156 cases of folding defects were determined to be defective, and only 132 cases of normal wrinkling that were not actual defects were determined to be 100% normal. In addition, 153 cases of defective cuts were determined to be 100% defective, and 135 normal cases that only had wrinkling, etc. that were not actual defects were all determined to be 100% normal. As such, the apparatus and method according to the present invention show an extremely high detection rate. On the other hand, when determining only by the image, the rate of incorrect determination is very high at 19.4% for folding (37/(37+156)) and 16.8% for cutting (31/(31+153)).

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

## Claims

1. An electrode tab inspection apparatus for electrode assemblies, the electrode tab inspection apparatus comprising:
a photographing unit configured to photograph the electrode tab through transmission photography;
an edge setting unit configured to set an edge for a part of a photograph result of the photographing unit in which color or brightness changes; and
a classification unit configured to classify the edge set by the edge setting unit as being related to stability or not being related to stability.

2. The electrode tab inspection apparatus according to claim 1, wherein the electrode tab is constituted by two or more single electrode tabs that are stacked.

3. The electrode tab inspection apparatus according to claim 1, wherein the photographing unit takes a photograph through transmission photography using an X-ray.

4. The electrode tab inspection apparatus according to claim 1, wherein the edge is set for a part of the digitized photograph result where color or brightness of a pixel changes.

5. The electrode tab inspection apparatus according to claim 4, wherein the part where the color or brightness of the pixel changes is a part where a rate of change in the color or brightness of the pixel is equal to or greater than a reference value when the rate of change is measured.

6. The electrode tab inspection apparatus according to claim 1, wherein the edge is set such that folding, bending, tearing, wrinkling, and overlapping of the electrode tab are displayed.

7. The electrode tab inspection apparatus according to claim 1, wherein the classification unit comprises:
a boundary surface setting portion configured to set a predetermined closed polygon or closed curve for the photograph result;
an edge classification portion configured to divide the edge into unconnected edges; and
a first classification portion configured to classify each of the divided edges as being related to stability if each of the divided edges completely divides the predetermined closed polygon or closed curve into two areas and as not being related to stability if not.

8. The electrode tab inspection apparatus according to claim 7, wherein the classification unit is replaced by a second classification portion configured to classify each of the divided edges as being related to stability if each of the divided edges abuts a corner of the predetermined closed polygon or closed curve twice or more and as not being related to stability if not.

9. The electrode tab inspection apparatus according to claim 7, wherein the predetermined closed polygon or closed curve is formed at an outer periphery of the electrode tab when viewed from above or at a position spaced inward from the outer periphery.

10. An electrode tab inspection method for electrode assemblies, the electrode tab inspection method comprising:
a first step of photographing the electrode tab through transmission photography;
a second step of setting an edge for a part of a photograph result of the photographing unit in the first step in which color or brightness changes; and
a third step of classifying the edge in the second step as being related to stability or not being related to stability.

11. The electrode tab inspection method according to claim 10, wherein the electrode tab is constituted by two or more single electrode tabs that are stacked.

12. The electrode tab inspection method according to claim 10, wherein the first step is taking a photograph through transmission photography using an X-ray.

13. The electrode tab inspection method according to claim 10, wherein setting the edge in the second step is setting the edge for a part of the digitized photograph result where color or brightness of a pixel changes.

14. The electrode tab inspection method according to claim 13, wherein the part where the color or brightness of the pixel changes is a part where a rate of change in the color or brightness of the pixel is equal to or greater than a reference value when the rate of change is measured.

15. The electrode tab inspection method according to claim 10, wherein setting the edge in the second step is setting the edge such that folding, bending, tearing, wrinkling, and overlapping of the electrode tab are displayed.

16. The electrode tab inspection method according to claim 10, wherein the third step comprises:
a 3-1 step of setting a predetermined closed polygon or closed curve for the photograph result in the first step;
a 3-2 step of dividing the edge in the second step into unconnected edges; and
a 3-3 step of classifying each of the edges divided in the 3-2 step as being related to stability if each of the edges completely divides the predetermined closed polygon or closed curve into two areas and as not being related to stability if not.

17. The electrode tab inspection method according to claim 16, wherein the 3-3 step is replaced by classifying each of the edges divided in the 3-2 step as being related to stability if each of the divided edges abuts a corner of the predetermined closed polygon or closed curve twice or more and as not being related to stability if not.

18. The electrode tab inspection method according to claim 16, wherein the 3-1 step and the 3-2 step are performed in a different order or simultaneously.

19. The electrode tab inspection method according to claim 16, wherein the predetermined closed polygon or closed curve is formed at an outer periphery of the electrode tab when viewed from above or at a position spaced inward from the outer periphery.

20. The electrode tab inspection method according to claim 10, further comprising a fourth step of determining the electrode assembly to be defective if there is an edge related to safety in the third step.
